# EUROPÄISCHE PATENTSCHRIFT

(11) **EP 0 693 719 B1**
(45) Veröffentlichungstag und Bekanntmachung des Hinweises auf die Patenterteilung: **25.03.1998**
(21) Anmeldenummer: 95110779.6
(22) Anmeldetag: 11.07.1995
(51) Int. Cl.: G05B 19/042

(54) **Schaltungsanordnung für eine Haushaltmaschine**
Circuit for a household appliance
Circuit de commande pour une machine domestique

(30) Priorität: 19.07.1994 DE 4425383
(43) Veröffentlichungstag der Anmeldung: 24.01.1996
(73) Patentinhaber: AKO-Werke GmbH & Co. KG, 88239 Wangen im Allgäu (DE); Arcelik S.A., 41460 Istanbul (TR)
(72) Erfinder: Kaps, Werner, Dipl.-Ing. (FH), D-88171 Weiler im Allgäu (DE); Tüzüngüc, Mustafa, Dipl.-Ing., D.19 Kiziltoprak, T-41460 Istanbul (TR)
(74) Vertreter: Gaiser, Hartmut, Dipl.-Ing.

(56) Entgegenhaltungen:
- EP-A- 0 027 432
- EP-A- 0 162 423
- PATENT ABSTRACTS OF JAPAN vol. 006 no. 221 (P-153) ,5.November 1982 & JP-A-57 125412 (HITACHI NETSUKIGU KK) 4.August 1982,

## Beschreibung

Die Erfindung betrifft ein Steuerungsverfahren und eine Schaltungsanordnung für eine Haushaltmaschine, beispielsweise Waschmaschine, wobei ein Mikroprozessor als Steuerelektronik mit der Frequenz der elektrischen Netzspannung synchronisiert wird und die Funktionen von Aggregaten der Maschine steuert und/oder regelt.

Eine derartige Schaltungsanordnung ist in der EP 0 162 423 B1 beschrieben. Die Steuerelektronik ist ein Mikroprozessor, der die Drehzahl der Wäschetrommel bzw. deren Motors auch in Abhängigkeit von der jeweiligen Unwucht der beladenen Wäschetrommel programmgerecht steuert. Der Mikroprozessor ist von einem Netzteil gespeist und mit der Netzfrequenz synchronisiert. Der Mikroprozessor steuert den Waschmaschinenmotor über einen Triac in Phasenanschnittsteuerung. Er steuert auch die Drehrichtung des Motors. Ein Programmschaltwerk übermittelt dem Mikroprozessor in den einzelnen Programmschritten Sollwerte.

Auch in der DE 40 15 853 A1 ist eine derartige Schaltungsanordnung beschrieben.

Bei den bekannten Schaltungen ist die aktuelle Höhe der Netzspannung nicht überwacht, weil davon ausgegangen werden kann, daß in den meisten Versorgungsnetzen die Höhe der Netzspannung im üblichen Toleranzrahmen konstant ist.

Es gibt jedoch auch Versorgungsnetze, bei denen die Höhe der Netzspannung über längere Zeit deutlich unter den Toleranzen liegen kann. Werden Haushaltsmaschinen, beispielsweise Waschmaschinen, die mit einer Steuerelektronik, insbesondere Mikroprozessor, zur Programmsteuerung und zur Drehzahlsteuerung arbeiten, an ein solches Versorgungsnetz angeschlossen, dann kann es bei Netzspannungseinbrüchen zu beträchtlichen Funktionsstörungen kommen. Messungen, die eine konstante Netzspannung voraussetzen, wie beispielsweise eine Unwuchtmessung, sind bei Netzspannungseinbrüchen mit einem erhöhten Fehler behaftet, so daß die Steuerelektronik nicht die aufgrund der tatsächlichen Unwucht im Programmablauf an sich gewünschte Drehzahl einstellt.

Das Einlesen von Sollwert-Signalen in den Mikroprozessor, die aus der Netzspannung abgeleitet sind, beispielsweise das Signal eines Wasser-Niveauschalters der Wäschetrommel, setzt eine im wesentlichen konstante Netzspannung voraus. Bei Netzspannungseinbrüchen werden falsche Sollwerte eingelesen. Dies hat zur Folge, daß der Mikroprozessor Falsch reagiert und das Programm fehlerhaft verläuft.

Bei einem solchen Netzeinbruch kann es auch dazu kommen, daß ein den Mikroprozessor versorgendes Netzteil nicht mehr richtig arbeitet, so daß am Mikroprozessor ein Reset-Befehl auftritt. Ein Netzausfallsignal tritt dabei am Mikroprozessor nicht auf, weil die Netzfrequenz zwar bei niedriger Spannung, jedoch immer noch anliegt. Ein Netzausfallsignal würde den aktuellen Programmstatus in einen Speicher (EEprom) sichern, so daß nach dem Netzausfall das Programm an der richtigen Stelle weiterlaufen könnte. Wegen des Reset-Befehls bei nicht auftretendem Netzausfallsignal kommt es jedoch dazu, daß der Mikroprozessor nach dem Netzspannungseinbruch an einer unrichtigen Stelle des Programms weiterarbeitet.

Zur Vermeidung obiger Störungen ist es Aufgabe der Erfindung, ein Steuerungsverfahren und eine Schaltungsanordnung der eingangs genannten Art vorzuschlagen, das/die unterschiedliche Höhen der Netzspannung, insbesondere einen über mehrere Halbwellen bestehenden Netzspannungseinbruch, erkennt und das/die aktuelle Höhe der Netzspannung bei der durch die Steuerelektronik erfolgenden Steuerung und/oder Regelung der Aggregate der Maschine berücksichtigt.

Erfindungsgemäß ist obige Aufgabe hinsichtlich des Steuerungsverfahrens durch den Patentanspruch 1 und hinsichtlich der Schaltungsanordnung durch den Patentanspruch 2 gelöst.

Dadurch ist erreicht, daß die Steuerelektronik nicht nur mit der Frequenz der Netzspannung synchronisiert ist, sondern auch Netzspannungseinbrüche erfaßt und deren Einfluß auf die Funktionssteuerung der Aggregate, also den Programmablauf unterdrückt. Es ist damit gewährleistet, daß die Maschine auch an einem Netz mit starken Spannungseinbrüchen betrieben werden kann, ohne daß es zu wesentlichen Störungen und Fehlern im Programmablauf kommt.

Um einzelne kurzzeitige Netzeinbrüche, die den Funktionsablauf stören, nicht wirksam werden zu lassen, addiert die Steuerelektronik Meßwerte zyklisch, wobei die Summe der Meßwerte der aktuellen Netzspannung proportional ist. Hierfür bestehen die in den Unteransprüchen 4, 5, 6 und 7 angegebenen Ausführungen.

In weiterer Ausgestaltung der Erfindung ist an die Steuerelektronik ein Spannungsteiler angeschlossen, der die aktuelle Netzspannung proportional herabsetzt.

Die Steuerelektronik kann zur Steuerung der Drehzahl des Waschmaschinenmotors eine Messung der Unwucht der beladenen Wäschetrommel durchführen und dieses Meßergebnis entsprechend der aktuellen Höhe der Netzspannung korrigieren, so daß ein Netzspannungseinbruch nicht zu einer falschen Drehzahl der Waschmaschinentrommel führt.

Die Steuerelektronik kann bei einem Netzspannungseinbruch von ihr gesteuerte Programmabschnitte sperren, die bei einem Netzspannungseinbruch nicht richtig ablaufen könnten.

Bei einem Netzspannungseinbruch wird die Steuerelektronik ihren aktuellen Programmstatus speichern, um dann nach dem Netzspannungseinbruch mit dem richtigen Programmschritt weiterzuarbeiten.

Es ist auch möglich, daß die Steuerelektronik die Steuergröße als Differenz zwischen der Netz-Sollspannung und der ermittelten aktuellen Netzspannung bildet.

Ein Ausführungsbeispiel ist im folgenden beschrieben. In der Zeichnung zeigen:
Figur 1 ein Schaltbild der Schaltungsanordnung schematisch und
Figur 2 Spannungsdiagramme, wobei
   a) die sinusförmige Netzspannung und die Meßzeitpunkte (Phasenwinkel) in den positiven Halbwellen zeigt und
   b) die netzfrequenzabhängigen Synchronisierimpulse darstellt.

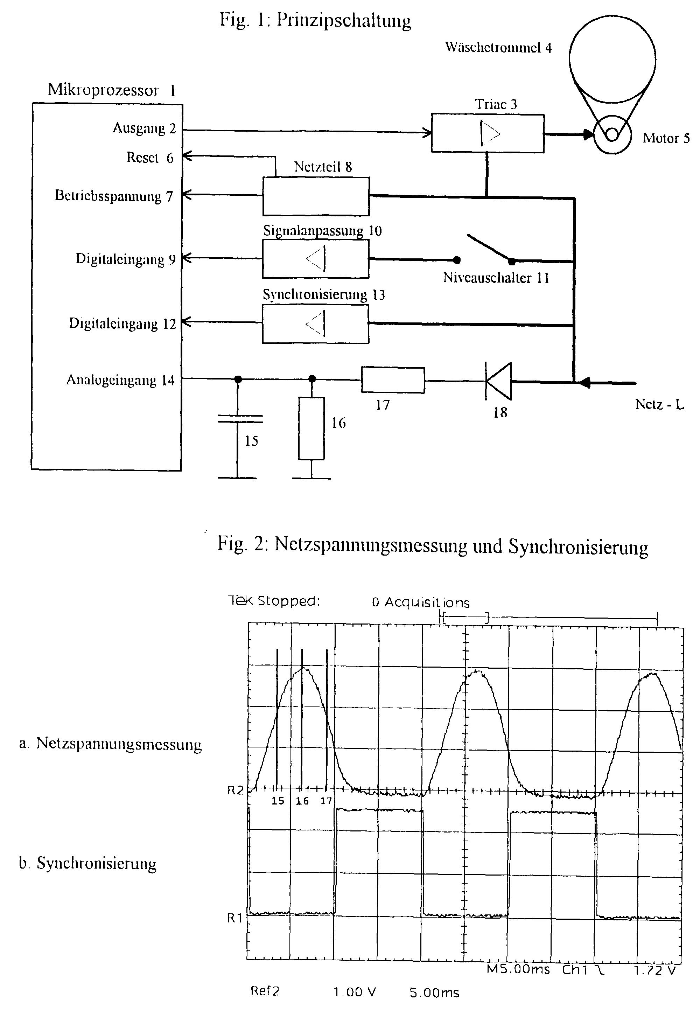

Eine Schaltungsanordnung einer Waschmaschine ist an ein elektrisches Wechselspannungsnetz(L,N) angeschlossen. Die Schaltungsanordnung weist als Steuerelektronik einen Mikroprozessor(1) auf. Zwischen der Netzphase(L) und dem Mikroprozessor(1) liegt ein Netzteil(8), das die Betriebsspannung(7) und das Resetsignal(6) für den Mikroprozessor(1) liefert. Eine Synchronisierung(13) generiert für den Mikroprozessor(1) ein netzsynchrones Steuersignal (vgl. Fig. 2b), das an einem Digitaleingang (12) liegt. Über eine Signalanpassung(10) können Schalter, die mit Netzspannung versorgt werden (z.B. Niveauschalter 11), über einen Digitaleingang(9) eingelesen werden.

An die Netzphase(L) ist ein Einweggleichrichter(18) angeschlossen, der über einen Spannungsteiler aus Widerständen(16,17) an einen Analogeingang(14) des Mikroprozessors(1) gelegt ist. Diesem parallel liegt ein Kondensator(15), der hochfrequente Störungen ableitet. Am Analogeingang(14) liegen dabei die positiven, in ihrer Spannung herabgesetzten Netzhalbwellen des Netzes(L,N) an.

An einen der Ausgänge(2) des Mikroprozessors(1) ist eine Motorsteuerung(3) angeschlossen, die mit einem Triac arbeitet und dadurch die Drehzahl eines Waschmaschinenmotors(5) steuert, welcher eine Wäschetrommel(4) antreibt. Weitere Ausgänge des Mikroprozessors(1) steuern weitere Aggregate der Waschmaschine. Außerdem erfaßt der Mikroprozessor(1) an weiteren Eingängen Istwerte des Waschmaschinen-Programmablaufs und Sollwerte einer nicht näher dargestellten Programmsteuerung.

Der Mikroprozessor(1) mißt in jeder der positiven Halbwellen der reduzierten Netzwechselspannung die Höhe der Netzspannung in drei oder mehreren Meßzeitpunkten bzw. in drei Phasenwinkeln(45^{o}, 90^{o}, 135^{o}) (vgl. Fig. 2a).

Der Mikroprozessor(1) addiert die in den Meßzeitpunkten bzw. Phasenwinkeln jeweils auftretenden Spannungswerte. Er erkennt damit die aktuelle Netzspannung und dadurch insbesondere länger dauernde Einbrüche der Netzspannung. Aus der Summe der Meßwerte ermittelt der Mikroprozessor (1) eine Steuergröße, mit der er auf die Motorsteuerung (3) und/oder andere Funktionen der Aggregate der Waschmaschine in der Weise einwirkt, daß Netzspannungseinbrüche nicht zu wesentlichen Funktionsstörungen führen.

Die Drehzahlsteuerung über den Ausgang(2) kann entsprechend der aktuellen Netzspannung erfolgen. Bei Netzspannungseinbrüchen, die dazu führen, daß das Netzteil(8) keine hinreichende Versorgungsspannung liefert, kann der Mikroprozessor(1) seinen aktuellen Programmzustand in einen Speicher (EEprom) ablegen, um nach dem Netzspannungseinbruch wieder im richtigen Programmschritt weiterzuarbeiten. Gleiches gilt für den Wegfall des Synchronisiersignals am Eingang(12).

## Patentansprüche

1. Steuerungsverfahren für eine Haushaltmaschine, beispielsweise Waschmaschine, wobei ein Mikroprozessor als Steuerelektronik mit der Frequenz der elektrischen Netzspannung synchronisiert wird und die Funktion von Aggregaten der Maschine steuert und/oder regelt,
dadurch gekennzeichnet,
daß die Steuerelektronik(1) zyklisch in einem oder mehreren bestimmten Phasenwinkeln der Netzwellen die jeweilige Höhe der Netzspannung mißt, daß die Steuerelektronik(1) aus den Meßwerten eine Steuergröße ermittelt, die der aktuellen Netzspannung proportional ist und daß die Steuerelektronik(1) mit dieser Steuergröße solche Aggregatfunktionen beeinflußt, die von der Höhe der Netzspannung abhängig sind.

2. Schaltungsanordnung für eine Haushaltmaschine, beispielsweise Waschmaschine, wobei ein Mikroprozessor als Steuerelektronik mit der Frequenz der elektrischen Netzspannung synchronisiert wird und die Funktion von Aggregaten der Maschine steuert und/oder regelt,
dadurch gekennzeichnet,
daß die Steuerelektronik(1) ein Mittel aufweist, das zyklische in einem oder mehreren bestimmten Phasenwinkeln der Netzwellen die jeweilige Höhe der Netzspannung mißt, daß die Steuerelektronik(1) ein Mittel aufweist, das aus den Meßwerten eine Steuergröße ermittelt, die der aktuellen Netzspannung proportional ist und daß die Steuerelektronik(1) mit dieser Steuergröße solche Aggregatfunktionen beeinflußt, die von der Höhe der Netzspannung abhängig sind.

3. Schaltungsanordnung nach Anspruch 2,
dadurch gekennzeichnet,
daß die Steuerelektronik(1) ein Mittel aufweist, das Heßwerte der aktuellen Netzwechselspannung zyklisch addiert, wobei die Summe der Meßwerte der aktuellen Netzspannung proportional ist.

4. Schaltungsanordnung nach Anspruch 3,
dadurch gekennzeichnet,
daß ein Einweggleichrichter(18) für die Netzspannung an die Steuerelektronik(1) angeschlossen ist und die Steuerelektronik(1) ein Mittel aufweist, das die Höhe der Netzspannung in den Halbwellen jeweils in einem bestimmten Phasenwinkel mißt und die Meßwerte mehrerer Halbwellen zyklisch addiert, wobei die Summe der aktuellen Netzspannung proportional ist.

5. Schaltungsanordnung nach Anspruch 3,
dadurch gekennzeichnet,
daß ein Einweggleichrichter(18) für die Netzspannung an die Steuerelektronik(1) angeschlossen ist und die Steuerelektronik(1) ein Mittel aufweist, das die Höhe der Netzspannung in den Halbwellen jeweils in zwei oder mehreren bestimmten Phasenwinkeln mißt und die Meßwerte jeder Halbwelle addiert, wobei die Summe der aktuellen Netzspannung proportional ist.

6. Schaltungsanordnung nach Anspruch 3,
dadurch gekennzeichnet,
daß ein Einweggleichrichter (18) für die Netzspannung an die Steuerelektronik(1) angeschlossen ist und die Steuerelektronik(1) ein Mittel aufweist, das die Höhe der Netzspannung in den Halbwellen jeweils in zwei oder mehreren bestimmten Phasenwinkeln mißt und daß die Steuerelektronik(1) ein Mittel aufweist, das die Summen der Meßwerte über mehrere Halbwellen addiert, wobei die Summe der aktuellen Netzwechselspannung proportional ist.

7. Schaltungsanordnung nach Anspruch 5 oder 6,
dadurch gekennzeichnet,
daß die Steuerelektronik(1) ein Mittel aufweist, das in jeder Halbwelle die Höhe der Netzspannung in den Phasenwinkeln 45°, 90° und 135° mißt.

8. Schaltungsanordnung nach einem der Ansprüche 4 bis 7
dadurch gekennzeichnet,
daß zwischen der Steuerelektronik (1) und dem Einweggleichrichter (18) ein Spannungsteiler(16,17) angeschlossen ist, der die aktuelle Netzspannung herabsetzt.

9. Schaltungsanordnung nach einem der vorhergehenden Ansprüche,
dadurch gekennzeichnet,
daß die Steuerelektronik(1) zur Steuerung der Drehzahl des Waschmaschinenmotors(5) ein Mittel aufweist, das eine Messung der Unwucht der beladenen Wäschetrommel (4) durchführt und dieses Meßergebnis entsprechend der aktuellen Höhe der Netzspannung korrigiert.

10. Schaltungsanordnung nach einem der vorhergehenden Ansprüche,
dadurch gekennzeichnet,
daß die Steuerelektronik(1) ein Mittel aufweist, das bei Netzspannungseinbrüchen von ihr gesteuerte Programmabschnitte sperrt.

11. Schaltungsanordnung nach einem der vorhergehenden Ansprüche,
dadurch gekennzeichnet,
daß die Steuerelektronik(1) ein Mittel aufweist, das bei Netzspannungseinbrüchen ihren aktuellen Programmstatus speichert.

12. Schaltungsanordnung nach einem der vorhergehenden Ansprüche,
dadurch gekennzeichnet,
daß die Steuerelektronik(1) ein Mittel aufweist, das die Steuergröße als Differenz zwischen der Netz-Sollspannung und der ermittelten aktuellen Netzspannung bildet.

## Claims

1. Control method for a household appliance, for example a washing machine, a microprocessor as control electronics being synchronised with the frequency of the electrical mains voltage and controlling the function of aggregates of the machine in open and/or closed loop, characterised in that the control electronics (1) measure the respective level of the mains voltage cyclically in one or more specific phase angles of the mains waves, the control electronics (1) determine a control value from the measurement values which is proportional to the actual mains voltage, and with this control value the control electronics (1) influence those aggregate functions which are dependent upon the level of the mains voltage.

2. Circuit for a household appliance, for example a washing machine, a microprocessor as control electronics being synchronised with the frequency of the electric mains voltage and controlling the function of aggregates of the machine in open and/or closed loop, characterised in that the control electronics (1) comprise means which measure the respective level of the mains voltage cyclically in one or more specific phase angles of the mains waves, the control electronics (1) comprise means which determine a control value from-the measurement values which is proportional to the actual mains voltage, and with this control value the control electronics (1) influence those aggregate functions which are dependent upon the level of the mains voltage.

3. Circuit according to claim 2, characterised in that the control electronics (1) comprise means which cyclically add measurement values of the actual mains alternating voltage, the sum of the measurement values being proportional to the actual mains voltage.

4. Circuit according to claim 3, characterised in that a half-wave rectifier (18) for the mains voltage is connected to the control electronics (1) and the control electronics (1) comprise means which measure the level of the mains voltage in the half-waves in s specific phase angle in each case, and add the measurement values of a plurality of half-waves, the sum being proportional to the actual mains voltage.

5. Circuit according to claim 3, characterised in that a half-wave rectifier (18) for the mains voltage is connected to the control electronics (1) and the control electronics (1) comprise means which measure the level of the mains voltage in the half-waves in two or more specific phase angles in each case, and add the measurement values of each half-wave, the sum being proportional to the actual mains voltage.

6. Circuit according to claim 3, characterised in that a half-wave rectifier (18) for the mains voltage is connected to the control electronics (1) and the control electronics (1) comprise means which measure the level of the mains voltage in the half-waves in two or more specific phase angles in each case, and the control electronics (1) comprise means which add the sums of the measurement values over a plurality of half-waves, the sum being proportional to the actual mains alternating voltage.

7. Circuit according to claim 5 or 6, characterised in that the control electronics (1) comprise means which in each half-wave measure the level of the mains voltage in the phase angles 45°, 90° and 135°.

8. Circuit according to one of claims 4 to 7, characterised in that a voltage divider (16, 17), which reduces the actual mains voltage, is connected between the control electronics (1) and the half-wave rectifier (18).

9. Circuit according to one of the preceding claims, characterised in that the control electronics (1) comprise means for controlling the rotational speed of the washing machine motor (5), which carry out a measurement of the unbalance of the loaded washing drum (4) and correct this measurement result in accordance with the actual level of the mains voltage.

10. Circuit according to one of the preceding claims, characterised in that the control electronics (1) comprise means which block program sections controlled by the control electronics (1) in the event of mains voltage surges.

11. Circuit according to one of the preceding claims, characterised in that the control electronics (1) comprise means which store the actual program status of the control electronics (1) in the event of mains voltage surges.

12. Circuit according to one of the preceding claims, characterised in that the control electronics (1) comprise means which form the control value as the difference between the nominal mains voltage and the determined actual mains voltage.

## Revendications

1. Procédé de commande d'une machine domestique, par exemple d'une machine à laver, où un microprocesseur comme électronique de commande est synchronisé avec la fréquence de la tension électrique du secteur et commande et/ou règle la fonction d'agrégats de la machine,
caractérisé en ce que
l'électronique de commande (1) mesure d'une manière cyclique à un ou plusieurs angles de phase déterminés des ondes du secteur la valeur respective de la tension du secteur, en ce que l'électronique de commande (1) détermine à partir des valeurs de mesure une grandeur de commande qui est proportionnelle à la tension actuelle du secteur et en ce que l'électronique de commande (1) agit avec cette grandeur de commande sur des fonctions d'agrégats qui dépendent de la valeur de la tension du secteur.

2. Circuit de commande pour une machine domestique, par exemple une machine à laver, où un microprocesseur comme électronique de commande est synchronisé avec la fréquence de la tension électrique du secteur et commande et/ou règle la fonction d'agrégats de la machine,
caractérisé en ce que
l'électronique de commande (1) présente un moyen qui mesure d'une manière cyclique à un ou plusieurs angles de phase déterminés des ondes de secteur la valeur respective de la tension du secteur, en ce que l'électronique de commande (1) présente un moyen qui détermine à partir des valeurs de mesure une grandeur de commande qui est proportionnelle à la tension actuelle du secteur, et en ce que l'électronique de commande (1) agit avec cette grandeur de commande sur des fonctions d'agrégats qui dépendent de la valeur de la tension du secteur.

3. Circuit de commande selon la revendication 2,
caractérisé en ce que
l'électronique de commande (1) présente un moyen qui additionne d'une manière cyclique les valeurs de mesure de la tension alternative actuelle du secteur, la somme des valeurs de mesure étant proportionnelle à la tension actuelle du secteur.

4. Circuit de commande selon la revendication 3,
caractérisé en ce qu'
un redresseur demi-onde (18) pour la tension du secteur est raccordé à l'électronique de commande (1) et que l'électronique de commande (1) présente un moyen qui mesure la valeur de la tension du secteur dans les demi-ondes respectivement dans un angle de phase déterminé et additionne d'une manière cyclique les valeurs de mesure de plusieurs demi-ondes, la somme étant proportionnelle à la tension actuelle du secteur.

5. Circuit de commande selon la revendication 3,
caractérisé en ce qu'
un redresseur demi-onde (18) pour la tension du secteur est raccordé à l'électronique de commande (1) et que l'électronique de commande (1) présente un moyen qui mesure la valeur de la tension du secteur dans les demi-ondes respectivement dans deux ou plusieurs angles de phase déterminés et additionne les valeurs de mesure de chaque demi-onde, la somme étant proportionnelle à la tension actuelle du secteur.

6. Circuit de commande selon la revendication 3,
caractérisé en ce qu'
un redresseur demi-onde (18) pour la tension du secteur est raccordé à l'électronique de commande (1) et que l'électronique de commande (1) présente un moyen qui mesure la valeur de la tension du secteur dans les demi-ondes respectivement à deux ou plusieurs angles de phase déterminés et en ce que l'électronique de commande (1) présente un moyen qui additionne les sommes des valeurs de mesure sur plusieurs demi-ondes, la somme étant proportionnelle à la tension alternative actuelle du secteur.

7. Circuit de commande selon la revendication 5 ou 6,
caractérisé en ce que
l'électronique de commande (1) présente un moyen qui mesure dans chaque demi-onde la valeur de la tension du secteur aux angles de phase de 45°, 90° et 135°.

8. Circuit de commande selon l'une des revendications 4 à 7,
caractérisé en ce
qu'il est raccordé entre l'électronique de commande (1) et le redresseur demi-onde (18) un diviseur de tension (16, 17) qui diminue la tension actuelle du secteur.

9. Circuit de commande selon l'une des revendications précédentes,
caractérisé en ce que
l'électronique de commande (1), pour la commande de la vitesse de rotation du moteur de la machine à laver (5) présente un moyen qui effectue une mesure du balourd du tambour à linge chargé (4) et corrige ce résultat de mesure conformément à la valeur actuelle de la tension du secteur.

10. Circuit de commande selon l'une des revendications précédentes,
caractérisé en ce que
l'électronique de commande (1) présente un moyen qui bloque dans le cas de chutes de la tension du secteur des parties de programme commandées par celle-ci.

11. Circuit de commande selon l'une des revendications précédentes,
caractérisé en ce que
l'électronique de commande (1) ) présente un moyen qui, dans le cas de chutes de la tension du secteur, mémorise son statut de programme actuel.

12. Circuit de commande selon l'une des revendications précédentes,
caractérisé en ce que
l'électronique de commande (1) présente un moyen qui forme la grandeur de commande comme différence entre la tension de consigne du secteur et la tension de secteur actuelle déterminée.
